# EUROPEAN PATENT SPECIFICATION

(11) **EP 0 557 674 B1**
(45) Date of publication and mention of the grant of the patent: **02.05.1997**
(21) Application number: 92830086.2
(22) Date of filing: 26.02.1992
(51) Int. Cl.: H01M 4/92, B01J 23/52, B01J 23/89

(54) **Platinum alloy catalyst and process of preparing same**
Katalysator aus Platinumlegierung und Verfahren für seine Herstellung
Catalyseur à base d'alliage de platine et procédé pour le préparer

(43) Date of publication of application: 01.09.1993
(73) Proprietor: Tanaka Kikinzoku Kogyo K.K., Chuo-ku Tokyo (JP); STONEHART ASSOCIATES INC., Madison, Connecticut 06443 (US)
(72) Inventor: Stonehart, Paul, Madison, Connecticut 06443 (US)
(74) Representative: Pellegri, Alberto

(56) References cited:
- EP-A- 0 089 252
- EP-A- 0 450 849
- WO-A-90/05798
- WO-A-92/02965
- GB-A- 940 710
- EP A 0 536 420
- EP A 0 594 858
- EP A 0 587 896

## Description

The present invention relates to a platinum alloy catalyst comprising a carbon support supported with platinum gold and other metals especially suited for being employed as an electrocatalyst of a fuel cell, and a process of preparing the same.

Catalysts comprising a carbon support and various catalyst metals, mainly platinum, supported thereon have heretofore been employed as those for various chemical reactions and for electrodes of fuel cells (U.S. Patent No.4,985,388, European Patent Publication No.329,.626). A carbon catalyst supported with an element electrode substance is also widely employed.

EP-A-0536420 discloses a supported catalyst for hydrogenation processes consisting of platinum and at least one metal selected from the group consisting of silver, copper, gold, tellurium, zinc, chromium, molybdenum and thallium.

EP-A-0587896 discloses a process for producing 1,1,4,4,4-exafluorobutane using a hydrogenation catalyst containing an alloy composed by at least one of palladium and platinum and at least a second metallic component selected from the group consisting of silver, copper, gold, tellurium, zinc, chromium, molybdenum and thallium.

EP-A-0594858 discloses a process for producing 1,1-dichloro-2,2,2-trifluoroethane using a hydrogenation catalyst composed of platinum and of at least one metal selected from the group consisting of silver, copper, gold, tellurium, zinc, chromium, molybdenum and thallium.

WO92/02965 describes a fuel cell wherein the electrocatalyst is a combination of a noble metal belonging to group VIII with gold. Gold is used for reducing poisoning by absorbed reaction intermediates.

While these alloy catalysts exhibit a relatively high value of activity, the catalysts possess a drawback that lowering of activity with time (lowering of performance) is likely to occur and the lowering speed is high because the dissolution of the metal components cannot be avoided.

### Summary of the Invention

An object of the present invention is to provide a platinum alloy catalyst having a higher activity and its preparation method.

Another object is to provide a platinum alloy catalyst having a longer life and its preparation method.

A further object is to provide a platinum alloy catalyst which possess excellent anti-dissolution characteristics against a hot concentrated phosphoric acid and its preparation method.

In accordance with one aspect of the present invention, there is provided a platinum alloy catalyst which comprises a carbon support and a platinum alloy supported thereon which contains gold.

The amount of the gold contained in the platinum alloy is desirably 3 to 20 atomic percent, and the platinum alloy catalyst further contains at least two metals selected from the group consisting of nickel, cobalt and manganese, other than the platinum and the gold.

In another aspect of the present invention, there is provided a process of preparing a platinum alloy catalyst comprising reducing a platinum compound and a gold compound and supporting the platinum-gold alloy on a carbon support in which a thiosulfate and/or a metabisulfite is employed as a reductant of the platinum compound and the gold compound.

In a further aspect of the present invention, there is provided a process of preparing a platinum alloy catalyst comprising supporting platinum, gold and at least two metals selected from the group consisting of nickel, cobalt and manganese on a carbon support in which the process further comprises reducing a platinum compound and a gold compound by means of a thiosulfate and/or a metabisulfite as a reductant followed by heating to deposit the platinum-gold alloy on the carbon support; adding organic acid amines of at least two metals selected from the group consisting of nickel, cobalt and manganese, and applying a reduction step to deposit said at least two metals on the carbon support followed by alloying the platinum-gold alloy with at least the two metals selected from the group consisting of nickel, cobalt and manganese by means of heating at a lower temperature.

In the last aspect, the order of supporting the platinum-gold alloy and at least the two metals may be reversed.

According to the first aspect of the invention, the element dissolution, especially, against the hot concentrated phosphoric acid can be depressed without the lowering of the catalytic activity by the effect of the gold addition in the range of 3 to 20 atomic percent of gold with respect to the platinum in the platinum alloy, and
further elevation of the catalytic activity can be attained by employing the platinum-gold alloy further containing at least the two metals selected from the group consisting of nickel, cobalt and manganese.

According to the second aspect of the invention, the agglomeration of the deposited alloy particles can be effectively depressed so that a catalyst having a high surface area and a high activity can be obtained.

According to the third and fourth aspects of the invention, the alloying at a lower temperature may be realized by employing the organic acid amines of the metals to provide a catalyst having a high surface area and a high activity similarly to the second aspect.

### Brief Description of the Drawing

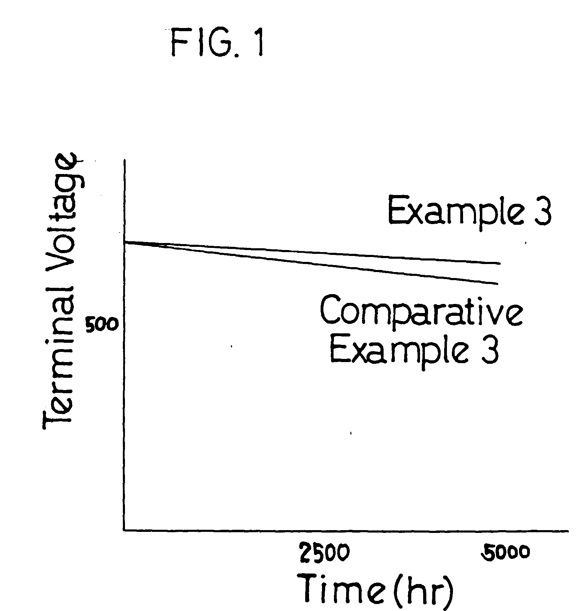

Fig. 1 is a graph showing variation of a terminal voltage with time when the platinum alloy catalysts of Example 3 and Comparative Example 3 are employed as a cathode of a phosphoric acid type fuel cell.

### Detailed Description of the Invention

Gold has been known to be a negative catalyst to an oxygen reduction reaction.

However by adding 3 to 20 atomic percent of gold with respect to platinum in a catalyst followed by alloying, the catalyst exhibits little lowering of its activity compared with a catalyst having no gold, and can considerably reduce the dissolution of the alloy components in hot concentrated phosphoric acid. The most preferable amount of the gold with respect to the platinum in the catalyst is 5 to 10 atomic percent.

Carbon is employed as a catalyst support in the present invention. The carbon includes a simple substance having any form of which a main component is carbon such as carbon black, graphite and active carbon. Such carbon as acetylene black (trade name: Shawinigan Acetylene Black, Denka Black or the like), electroconductive carbon black (trade name: Vulcan XC-72 or the like) and graphitized carbon black may be employed. Preferably, the carbon support is porous and possesses a large surface area, for instance, about 30 to 2000 m²/g, and possesses a particle size of 100 to 5000 Å.

Platinum and gold are made to be supported onto the carbon support. The supporting of the platinum and the gold may be preferably carried out in accordance with a following conventional method.

A solution of a platinum-containing ion, for example, an aqueous solution of chloroplatinic acid is reduced, and a solution of a gold-containing ion, for example, an aqueous solution of chloroauric acid is added thereto and reduced. The two ions may be reduced simultaneously. Then, the platinum and the gold is supported on a carbon support by adding the carbon support to the above solution.

If, however, a strong reductant is employed in these reactions for reduction, the size of the platinum and gold particles increases so that the surface area of the particles per unit weight considerably decreases. For this reason, such a weak reductant as thiosulfuric acid, sodium thiosulfate (Na₂S₂O₃.5H₂O) or a metabisulfite salt is employed to depress the decrease of the surface area of the platinum and the gold.

With progress of the reaction, the solution turns from yellow to orange, and with the further growth of the fine metal crystals for several hours, the solution gradually becomes darker. Light passing through the solution exhibits the Tyndall effect showing the existence of colloidal particles.

This sol is then adsorbed onto the carbon support to provide the carbon support supported with the platinum and gold through appropriate procedures such as drying.

Then, the gold is sufficiently dispersed in the platinum to provide a uniform composition to obtain the platinum alloy catalyst comprising the carbon support supported with the platinum and gold by alloying the mixture of the platinum and the gold on the carbon support by means of thermal treatment in a flow of hydrogen, nitrogen or the mixture thereof, for example, at 700 °C for one hour.

At least two other metals selected selected the group consisting of manganese, cobalt and nickel are supported on the carbon support on which the platinum-gold alloy has been already supported and is heated so that said other metals are alloyed with the platinum-gold alloy. However, it is unpreferable to employ an ordinary method of alloying because the surface area decreases due to the agglomeration of the alloy when the alloying is performed at a high temperature.

For this reason, in the process of the present invention, ammonium hydroxide or the like is initially added to the warm aqueous solution of an organic acid salt preferably a formate or an acetate of at least two metals selected from the group consisting of manganese, cobalt and nickel to be added to the platinum-gold alloy to convert the acid salt into the corresponding metal salt of the organic acid amine preferably the metal salt of formic acid amine or acetic acid amine.

When an ordinary metal salt (e.g. nitrate) is thermally treated in a conventional process, high temperature reduction is necessary to alloy the platinum-gold alloy with a fire-resistant oxide formed by the thermal treatment so that the crystal growth (decrease of surface area) may occur prior to the alloying of the platinum-gold alloy. On the other hand, by the procedure of this invention, the metal salt can easily be reduced at a relatively low temperature with the minimum decrease of the surface area.

After, if necessary, impure metals in the metal salts are removed by extraction and dried, the metal salts are reduced in hydrogen, for example, at 250 °C for 30 minutes and then the metals are alloyed at an elevated temperature e.g. 700 °C.

In case of preparing the four-element catalyst containing the platinum and the gold, the amount of the metal salts of the organic acid amines is so adjusted that the catalyst contains 90 to 40 atomic percent of the platinum, 1 to 8 atomic percent of the gold and each of 4 to 28 atomic percent of the third and fourth metals, most preferably 50 atomic percent of the platinum, 4 atomic percent of the gold and each 23 atomic percent of the third and fourth metals.

In case of preparing the five-element catalyst containing the platinum and the gold, the amount of the metal salts of the organic acid amines is so adjusted that the catalyst contains 85 to 25 atomic percent of the platinum, 1 to 8 atomic percent of the gold and each of 4 to 25 atomic percent of the third, fourth and fifth metals, most preferably 50 atomic percent of the platinum, 4 atomic percent of the gold, each 19 atomic percent of the third and fourth metals and 8 atomic percent of the fifth metal.

The catalyst according to the present invention may be prepared not only by the above preparing process in which the platinum is supported before the other metals are supported but also by the process in which the platinum is supported after the other metals are supported.

### Examples

The present invention will now be described in detail in connection with the following Examples. However, these Examples are not intended to limit the scope of the present invention.

### Example 1

Chloroplatinic acid containing 1.157 g of platinum was dissolved in 300 ml of water to which a solution was dropwise added 75 ml of a solution for reduction in which 4 g of sodium thiosulfate was dissolved. With the lapse of time, the mixed solution became from yellow to orange, further to dark orange.

After the lapse of about 1 hour, a liquid which had been prepared by dissolving chloroauric acid containing 0.094 g of gold into 30 ml of pure water was added dropwise to the mixed solution and stirred for two hours to prepare a colloidal solution of the platinum and the gold.

On the other hand, about 10 g of Acetylene Black to be employed as a catalyst support was suspended in 100 ml of pure water to prepare a well suspended slurry which was then added to the above colloidal solution. The solution was stirred for 2 minutes with a supersonic agitator so that the colloidal solution was forced to penetrate into the pores of Acetylene Black. The slurry was kept to be suspended and did not precipitate during the stirring operation.

After the slurry was dried in an oven at 75 to 80 °C overnight for removing water, the slurry was washed and filtered three times and was dried.

Then, for supporting the third and fourth metals, 50 ml of an aqueous solution of manganese acetate containing 0.040 g of manganese and 50 ml of an aqueous solution of cobalt acetate containing 0.043 g of cobalt were mixed. Ammonium hydroxide was added to the mixed solution to convert the acetates into their corresponding amine metal salts, and to the solution was added 3 g of the carbon catalyst containing the alloy of the platinum and the gold prepared as mentioned before, which was then agitated for 10 minutes to become slurry.

After the slurry was dried and the manganese salt and the cobalt salt were reduced to the corresponding metals by reducing the slurry in a hydrogen flow, the temperature of the atmosphere of the catalyst was raised to 900 °C to prepare a platinum-gold-manganese-cobalt alloy.

About 3.1 g of the platinum alloy catalyst was obtained, and its alloy composition was 50 atomic percent of the platinum, 23 atomic percent of the cobalt, 23 atomic percent of the manganese and 4 atomic percent of the gold.

### Example 2

About 3.1 g of a platinum alloy catalyst was obtained according to the same procedures of Example 1 except that 50 ml of an aqueous solution of nickel formate containing 0. 043 g of nickel was employed in place of the aqueous solution of the cobalt acetate of Example 1.

The alloy composition of the platinum alloy catalyst was 50 atomic percent of the platinum, 23 atomic percent of the nickel, 23 atomic percent of the manganese and 4 atomic percent of the gold.

### Example 3

About 3.1 g of a platinum alloy catalyst was obtained according to the same procedures of Example 1 except that 35 ml of an aqueous solution of manganese acetate containing 0.014 g of manganese was employed in place of the aqueous solution of the manganese acetate, and 35 ml of an aqueous solution of cobalt acetate containing 0.036 g of cobalt and 35 ml of an aqueous solution of nickel formate containing 0.036 g of nickel were employed in place of the aqueous solution of the cobalt acetate.

The alloy composition of the platinum alloy catalyst was 50 atomic percent of the platinum, 19 atomic percent of the nickel, 19 atomic percent of the cobalt, 8 atomic percent of the manganese and 4 atomic percent of the gold.

### Comparative Example 1

A carbon catalyst supported with platinum was prepared according to the same procedures of Example 1 except that a solution which had been prepared by dissolving chloroplatinic acid containing 1.149 g of platinum into 300 ml of pure water was employed and no gold was added. Then, about 3.1 g of a platinum-manganese-cobalt alloy catalyst was obtained according to similar procedures to those of Example 1 employing 50 ml of an aqueous solution of manganese acetate containing 0.044 g of manganese and 50 ml of an aqueous solution of cobalt acetate containing 0.047 g of cobalt.

The alloy composition of the platinum alloy catalyst was 50 atomic percent of the platinum, 25 atomic percent of the cobalt and 25 atomic percent of the manganese.

### Comparative Example 2

About 3.1 g of a platinum-nickel-manganese alloy catalyst was obtained according to the same procedures of Comparative Example 1 except that the aqueous solution of cobalt acetate of Comparative Example 1 was replaced with an aqueous solution of nickel formate containing 0.047 g of nickel.

The alloy composition of the platinum alloy catalyst was 50 atomic percent of the platinum, 25 atomic percent of the nickel and 25 atomic percent of the manganese.

### Comparative Example 3

About 3.1 g of a platinum alloy catalyst was obtained according to the same procedures of Comparative Example 1 except that the aqueous solution of the manganese acetate of Comparative Example 1 was replaced with 35 ml of an aqueous solution of manganese acetate containing 0.014 g of manganese, and the aqueous solution of the cobalt acetate was replaced with 35 ml of an aqueous solution of cobalt acetate containing 0.039 g of cobalt and with 35 ml of an aqueous solution of nickel formate containing 0.039 g of nickel.

The alloy composition of the platinum alloy catalyst was 50 atomic percent of the platinum, 21 atomic percent of the nickel, 21 atomic percent of cobalt and 8 atomic percent of the manganese.

The activities at 900 mV in pure oxygen of 1 atm. and 190 °C of a half cell, the amounts of the elements dissolved after the operation of 5000 hours as a single cell, and the lives of the respective six alloy catalysts of Examples 1 to 3 and Comparative Examples 1 to 3 were measured employing the six catalysts as a cathode of a phosphoric acid type fuel cell of which a supporting ratio of the platinum was 0.5 mg/cm². The results are shown in Table 1 and Fig. 1 (Example 3 and Comparative Example 3).

It is apparent from the results that no lowering of the activities, that is, no lowering of the catalytic activities due to the addition of the gold is observed while the stability of each alloy component against the hot concentrated phosphoric acid increases judging from the amounts of the element dissolution. As shown in the attached drawing, the difference of about 20 mV is generated in connection with the characteristic of the single cell life after the operation of 5000 hours, and the lowering of

**Table 1**

| | Activity (mg/mgPt) | Amount of Element Dissolution (%) | Life Characteristic(mv/1000h) |
|---|---|---|---|
| Example 1 | 52 | Co:20, Mn:20 | - 2 |
| 2 | 53 | Ni:20, Mn:20 | - 2 |
| 3 | 58 | Ni:20,Co:20,Mn:20 | - 2 |
| Comparative Example 1 | 52 | Co:80. Mn:60 | - 6 |
| 2 | 53 | Ni:80. Mn:60 | - 6 |
| 3 | 58 | Ni:80,Co:80,Mn:60 | - 5 |

the cell performance due to the element dissolusion can be depressed which has not been avoided by a conventional catalyst.

## Claims

1. A platinum alloy catalyst which comprises a carbon support and a platinum alloy supported thereon, characterized in that said alloy contains platinum, gold and at least two metals selected from the group consisting of nickel, cobalt and manganese.

2. The platinum alloy catalyst as defined in claim 1, wherein the alloy is a four-metal alloy, the relative percentages being: 90 to 40 atomic percent platinum, 1 to 8 atomic percent gold and 4 to 28 atomic percent of each of a third and fourth metals.

3. The platinum alloy catalyst according to claim 2, wherein the four-metal alloy has the following composition:
50 atomic percent platinum, 4 atomic percent gold and 23 atomic percent of each of the third and fourth metals.

4. The platinum alloy catalyst according to claim 2, wherein the alloy is a five-metal alloy, the relative percentage being: 85 to 25 atomic percent platinum, 1 to 8 atomic percent gold and 4 to 25 atomic percent of each of the third, fourth and fifth metals.

5. The platinum alloy catalyst according to claim 4, wherein the five-metal alloy has the following composition:
50 atomic percent platinum, 4 atomic percent gold and 19 atomic percent of each of the third and fourth metals and 8 atomic percent of the fifth metal.

6. A process of preparing a platinum alloy catalyst comprising reducing a platinum compound and a gold compound and supporting the platinum-gold alloy on a carbon support characterized in that
a thiosulfate and/or a metabisulfite is employed as a reductant of the platinum compound and the gold compound.

7. A process of preparing a platinum alloy catalyst comprising supporting platinum, gold and at least two metals selected from the group consisting of nickel, cobalt and manganese on a carbon support characterized in that
the process further comprises reducing a platinum compound and a gold compound by means of a thiosulfate and/or a metabisulfite as a reductant followed by heating to deposit the platinum-gold alloy on the carbon support;
adding organic acid amines of at least two metals selected from the group consisting of nickel, cobalt and manganese, and applying a reduction step to deposit said at least two metals on the carbon support followed by alloying the platinum-gold alloy with at least the metals selected from the group consisting of nickel, cobalt and manganese by means of heating.

8. A process of preparing a platinum alloy catalyst comprising supporting platinum, gold and at least two metals selected from the group consisting of nickel, cobalt and manganese on a carbon support characterized in that
the process further comprises adding organic acid amines of at least two metals selected from the group consisting of nickel, cobalt and manganese on the carbon support;
applying a reduction step to deposit said at least two metals on the carbon support;
alloying the metals by means of heating;
reducing a platinum compound and a gold compound by means of a thiosulfate and/or a metabisulfite as a reductant followed by heating to deposit the platinum-gold alloy on the carbon support and to alloy the platinum-gold alloy with the said metals.

## Patentansprüche

1. Platinlegierungs-Katalysator, der einen Kohlenstoffträger und eine darauf aufgetragene Platinlegierung enthält, dadurch gekennzeichnet, daß die Legierung Platin, Gold und wenigstens zwei Metalle enthält, die aus der Gruppe bestehend aus Nickel, Kobalt und Mangan gewählt sind.

2. Platinlegierungs-Katalysator nach Anspruch 1, in dem die Legierung eine 4-Metall-Legierung ist, wobei die relativen Prozentsätze sind: 90 bis 40 Atom-% Platin, 1 bis 8 Atom-% Gold und jeweils 4 bis 28 Atom-% der dritten und vierten Metalle.

3. Platinlegierungs-Katalysator nach Anspruch 2, in dem die 4-Metall-Legierung die folgende Zusammensetzung besitzt:
50 Atom-% Platin, 4 Atom-% Gold und jeweils 23 Atom-% der dritten und vierten Metalle.

4. Platinlegierungs-Katalysator nach Anspruch 2, in dem die Legierung eine 5-Metall-Legierung ist, wobei die relativen Prozentsätze sind: 85 bis 25 Atom-% Platin, 1 bis 8 Atom-% Gold und jeweils 4 bis 25 Atom-% der dritten, vierten und fünften Metalle.

5. Platinlegierungs-Katalysator nach Anspruch 4, in dem die 5-Metall-Legierung die folgende Zusammensetzung besitzt:
50 Atom-% Platin, 4 Atom-% Gold und jeweils 19 Atom-% der dritten und vierten Metalle sowie 8 Atom-% des fünften Metalls.

6. Verfahren zur Herstellung eines Platinlegierung-Katalysators, das das Reduzieren einer Platinverbindung und einer Goldverbindung und das Auftragen der Platin-Gold-Legierung auf einen Kohlenstoffträger umfaßt, dadurch gekennzeichnet, daß
ein Thiosulfat und/oder ein Metabisulfit als Reduktionsmittel der Platinverbindung und der Goldverbindung verwendet werden.

7. Verfahren zur Herstellung eines Platinlegierung-Katalysators, das das Auftragen von Platin, Gold und wenigstens zwei Metallen, die aus der Gruppe bestehend aus Nickel, Kobalt und Mangan gewählt sind, auf einen Kohlenstoffträger umfaßt,
dadurch gekennzeichnet, daß das Verfahren ferner umfaßt:
das Reduzieren einer Platinverbindung und einer Goldverbindung mittels eines Thiosulfats und/oder eines Metabisulfits als Reduktionsmittel, gefolgt von einem Erwärmen zum Abscheiden der Platin-Gold-Legierung auf dem Kohlenstoffträger,
das Zugeben von organischen Säureaminen von wenigstens zwei Metallen, die aus der Gruppe bestehend aus Nickel, Kobalt und Mangan gewählt werden, und
das Anwenden eines Reduktionsschrittes zum Abscheiden der wenigstens zwei Metalle auf dem Kohlenstoffträger, gefolgt von einem Legieren der Platin-Gold-Legierung mittels Erwärmung mit wenigstens den zwei Metallen, die aus der Gruppe bestehend aus Nickel, Kobalt und Mangan gewählt sind.

8. Verfahren zur Herstellung eines Platinlegierungs-Katalysators, das das Auftragen von Platin, Gold und wenigstens zwei Metallen, die aus der Gruppe bestehend aus Nickel, Kobalt und Mangan gewählt sind, auf einen Kohlenstoffträger enthält,
dadurch gekennzeichnet, daß das Verfahren ferner umfaßt:
das Zugeben von organischen Säureaminen der wenigstens zwei Metalle, die aus der Gruppe bestehend aus Nickel, Kobalt und Mangan gewählt sind, auf dem Kohlenstoffträger,
das Anwenden eines Reduktionsschritts zum Abscheiden der wenigstens zwei Metalle auf dem Kohlenstoffträger,
das Legieren der Metalle mittels Erwärmung, und
das Reduzieren einer Platinverbindung und einer Goldverbindung mittels eines Thiosulfats und/oder eines Metabisulfits als Reduktionsmittel, gefolgt von einem Erwärmen zum Abscheiden der Platin-Gold-Legierung auf dem Kohlenstoffträger und zum Legieren der Platin-Gold-Legierung mit den Metallen.

## Revendications

1. Catalyseur en alliage de platine comprenant un support de carbone et un alliage de platine y supporté, caractérisé en ce que ledit alliage contient du platine, de l'or et au moins deux métaux choisis du groupe formé par nickel, cobalt et manganèse.

2. Le catalyseur en alliage de platine comme défini dans la revendication 1, dans lequel l'alliage est un alliage à quatre métaux, les pourcentages relatifs étant: de 90 à 40 pour-cent atomique de platine, de 1 à 8 pour-cent atomique d'or et de 4 à 28 pour-cent atomique de chaque troisième et quatrième métal.

3. Le catalyseur en alliage de platine selon la revendication 2, dans lequel l'alliage à quatre métaux a la composition suivante:
50 pour-cent atomique de platine, 4 pour-cent atomique d'or et 23 pour-cent atomique de chaque troisième et quatrième métal.

4. Le catalyseur en alliage de platine selon la revendication 2, dans lequel l'alliage est un alliage à cinq métaux, le pourcentage relatif étant: de 85 à 25 pour-cent atomique de platine, de 1 à 8 pour-cent atomique d'or et de 4 à 25 pour-cent atomique de chaque troisième, quatrième et cinquième métal.

5. Le catalyseur en alliage de platine selon la revendication 4, dans lequel l'alliage à cinq métaux a la composition suivante:
50 pour-cent atomique de platine, 4 pour-cent atomique d'or et 19 pour-cent atomique de chaque troisième et quatrième métal et 8 pour-cent atomique du cinquième métal.

6. Procédé de préparation d'un catalyseur en alliage de platine comprenant la réduction d'un composé de platine et d'un composé d'or et le soutien de l'alliage platine-or sur un support de carbone, caractérisé en ce qu'un thiosulfate et/ou un métabisulfite est employé comme réducteur du composé de platine et du composé d'or.

7. Procédé de préparation d'un catalyseur en alliage de platine comprenant le soutien de platine, d'or et d'au moins deux métaux choisis du groupe formé par nickel, cobalt et manganèse sur un support de carbone, caractérisé en ce que
le procédé comprend de plus la réduction d'un composé de platine et d'un composé d'or au moyen d'un thiosulfate et/ou d'un métabisulfite comme réducteur suivie par un chauffage pour déposer l'alliage platine-or sur le support de carbone;
l'addition d'amines d'acide organique d'au moins deux métaux choisis du groupe formé par nickel, cobalt et manganèse, et l'application d'un stade de réduction pour déposer lesdits au moins deux métaux sur le support de carbone, suivie par l'alliage de l'alliage platine-or avec au moins les métaux choisis du groupe formé par nickel, cobalt et manganèse au moyen d'un chauffage.

8. Procédé de préparation d'un catalyseur en alliage de platine comprenant le soutien de platine, d'or et d'au moins deux métaux choisis du groupe formé par nickel, cobalt et manganèse sur un support de carbone, caractérisé en ce que
le procédé comprend l'addition d'amines d'acide organique d'au moins deux métaux choisis du groupe formé par nickel, cobalt et manganèse sur le support de carbone;
l'application d'un stade de réduction pour déposer lesdits au moins deux métaux sur le support de carbone;
l'alliage des métaux au moyen d'un chauffage;
la réduction d'un composé de platine et d'un composé d'or au moyen d'un thiosulfate et/ou d'un métabisulfite comme réducteur, suivie par un chauffage pour déposer l'alliage platine-or sur le support de carbone et allier l'alliage platine-or avec lesdits métaux.
